# EUROPEAN PATENT SPECIFICATION

(11) **EP 2 816 667 B1**
(45) Date of publication and mention of the grant of the patent: **17.05.2017**
(21) Application number: 12868744.9
(22) Date of filing: 26.12.2012
(51) Int. Cl.: H01Q 15/04, H01Q 15/10

(54) **ARTIFICIAL DIELECTRIC LENS**
KÜNSTLICHE DIELEKTRISCHE LINSE
LENTILLE DIÉLECTRIQUE ARTIFICIELLE

(30) Priority: 15.02.2012 JP 2012030576
(43) Date of publication of application: 24.12.2014
(73) Proprietor: Ibaraki University, Ibaraki 310-8512 (JP)
(72) Inventor: SUZUKI Takehito, Hitachi-shi Ibaraki 316-8511 (JP)
(74) Representative: Grünecker Patent- und Rechtsanwälte PartG mbB
(86) International application number: PCT/JP2012/083626
(87) International publication number: WO 2013/121686

(56) References cited:
- WO-A1-94/11920
- WO-A1-97/22158
- JP-A- 2010 213 021
- US-A- 2 747 184
- US-A- 2 912 695
- WINSTON E KOCK: "Metal-Lens Antennas", PROCEEDINGS OF THE I.R.E. AND WAVES AND ELECTRONS,, vol. 17, no. 11, 1 November 1946 (1946-11-01), pages 828-836, XP001382574,
- YOUNG-JIN PARK ET AL.: 'A Photonic Bandgap (PBG) Structure for Guiding and Suppressing Surface Waves in Millimeter-Wave Antennas' IEEE TRANSACTIONS ON MICROWAVE THEORY AND TECHNIQUES vol. 49, no. 10, October 2001, pages 1854 - 1859, XP001108234

## Description

### TECHNICAL FILED

This invention relates to an artificial dielectric lens that can be arranged in place easily and can obtain a desired refractive index.

### BACKGROUND ART

A terahertz electromagnetic wave as a short-wavelength electromagnetic wave has a frequency from 0.1 to 10 THz (wavelength from 30 to 3000 µm). This wavelength is substantially the same as a range from the wavelength of a far-infrared wave to that of a millimeter wave. The terahertz electromagnetic wave exists in a frequency range between the frequency of "light" and that of a "millimeter wave." Thus, the terahertz electromagnetic wave has both an ability to identify an object with a spatial resolution as high as that of light and an ability to pass through a substance like a millimeter wave. An electromagnetic wave in the terahertz wave band has not been explored so far. Meanwhile, application of this electromagnetic wave for example to characterization of a material has been considered that is to be achieved by time-domain spectroscopy, imaging, and tomography while utilizing the characteristics of the electromagnetic wave in this frequency band. Generating the terahertz electromagnetic wave achieves both the performance of passing through a substance and straightness. This allows the terahertz electromagnetic wave to take the place of an X-ray to realize safe and innovative imaging or ultrahigh-speed radio communication of some hundreds of Gbps.

Optical elements in the terahertz wave band are being developed as well as light sources and detectors. These optical elements have been required to be improved. Achieving or designing a desired refractive index n arbitrarily with a material existing in the natural world is not easy. Thus, if a material itself is used as a lens by processing the material, the characteristics of the material determine optical characteristics. Examples of a representative lens in the terahertz wave band include a high-density polymer lens having a refractive index n of 1.52, a Tsurupica (registered trademark) lens having a refractive index n of 1.56, and a silicon lens having a refractive index n of 3.41. With respect to a microwave band, a lens using an electromagnetic metamaterial structure has been proposed (refer to Non-Patent Literature 1). This lens is configured by arranging conductive elements in a three-dimensional lattice structure, thereby allowing focusing of a microwave or an electromagnetic wave longer in a wavelength than a microwave.

A metamaterial usable to form for example a lens has been proposed (refer to Patent Literature 1). The metamaterial is formed of multiple unit cells; some of which have transmittance different from that of the remaining unit cells. The unit cells are arranged so as to provide a metamaterial with a gradient refractive index along one axis. A lens formed by using the metamaterial can have a negative refractive index in a range from the microwave band to the terahertz wave band, and can also be applied to a diffractive optical element or a gradient refractive index optical element.
Docmnent WINSTON E KOCK, "Metal-Lens Antennas", PROCEEDINGS OF THE I.R.E. AND WAVES AND ELECTRONS, (19461101), vol. 17. no. 11. PAGE 828 - 836, relates to a metal-lens antenna which utilizes the optical properties of radio waves. It consists of a number of conducting plates of proper shape and spacing and is, in affect, a lens, the focusing action of which is due to the high face velocity of the wave passing between the plates.
Document US 2,912,695 relates to an antenna comprising means for launching a wave from a given point and a corrugated surface extending from said point for guiding said wave, said surface having corrugations which are every where substantially normal to the radii expending from said given point to points on the straight line removed from said given point, at least one cross-sectional dimension of each corrugation differing from the corresponding dimension of other corrugations at least along some of the radii into connecting said given point and points on said straight line to equalize the phase delay of waves propagated along said radii.
Document US 2,747,184 relates to a reactive device for electromagnetic waves, comprising a plurality of space parallel bars of dielectric material distributed over an area transverse to the path of the waves and a plurality of channel-shaped members of metal foil each supported by a respective one of said dielectric bars.

### CITATION LIST

### NON-PATENT LITERATURE

Non-Patent Literature1: W. E. Kock, "Metallic delay lens, " Bell Syst. Tech. J. Vol. 27, pp. 58-82, 1948.

### PATENT LITERATURE

Patent Literature 1: JP 2011-254482 A
Patent Lietrature 2: JP 4183546 B1

### SUMMARY OF INVENTION

### TECHNICAL PROBLEM

A lens is arranged in front of a terahertz wave source so as to collect an emitted terahertz electromagnetic wave. At this time, failing to arrange the lens in place on an optical axis of the terahertz electromagnetic wave generated by the terahertz wave source makes it impossible to collect the terahertz electromagnetic wave efficiently. However, the terahertz electromagnetic wave is an invisible light ray and the lens is not always transparent to a visible light ray. Thus, the lens cannot be arranged easily on the optical axis of the electromagnetic wave by observing a visible light ray. In response, Patent Literature 2 discloses a configuration including an optical part made of a transparent material, and a visible light source to emit visible light such that the emitted visible light is directed along the optical path of the terahertz electromagnetic wave. The optical part is arranged on the optical axis of the terahertz electromagnetic wave by observing the visible light from the visible light source. In this configuration, the visible light passes through the optical part, so that the optical part can be arranged easily in place on the optical axis of the terahertz electromagnetic wave. However, if the optical part is for example a lens formed by using polyethylene as the transparent material, the transmitting characteristics of the optical part become degenerated steeply as a frequency becomes higher. However a Tsurupica (registered trademark) lens has improved transmission characteristics, the dielectric constant of the lens is inherent to a material and the refractive index of the lens is fixed, and thus, a desired refractive index can not be obtained. Therefore, the control of a refractive index using a lens structure without depending on characteristics inherent to a material brings about great significance in terms of a degree of flexibility of the designing the lens and cost.

It is therefore an object of this invention to provide an artificial dielectric lens that can be arranged in place easily and can obtain a desired refractive index.

### SOLUTION TO PROBLEM

The above object is solved by the subject matter of claim 1.

### ADVANTAGEOUS EFFECTS OF INVENTION

According to this invention, the lens is formed by laminating the multiple conductive plate pieces such that the conductive plate pieces are arranged parallel to each other at the given intervals. This causes visible light to pass through the artificial dielectric lens. Thus, the artificial dielectric lens can be arranged in place by observing visible light, thereby facilitating arrangement of the lens in place. A wave is delayed and collected according to the parameters including the number of the groove portion, the width and the depth of the groove portion. Thus, the resultant artificial dielectric lens is allowed to have a desired refractive index. In addition, since the lens is configured using the conductive plate pieces of a simple structure, the lens can be configured without requiring highly accurate processing. And also since the conductive plate pieces are made of metal, the lens can be configured with easily available material without requiring a special material.

### BRIEF DESCRIPTION OF DRAWINGS

Figs. 1(a), 1(b), and 1(c) are a perspective view, a front view, and a side view respectively showing the configuration of a metal dielectric lens as a first embodiment of an artificial dielectric lens of this invention.
Figs. 2(a) and 2(b) are a plan view and a side view respectively showing the structure of one metal plate piece forming the metal dielectric lens of the first embodiment of this invention.
Figs. 3(a) and 3(b) are a plan view and a side view respectively showing the configuration of a different metal plate piece forming the metal dielectric lens of the first embodiment of this invention.
Fig. 4 shows a partial configuration of the metal dielectric lens of the first embodiment of this invention in an enlarged manner. Fig. 4(a) is a side view. Fig. 4(b) is a table showing dimensions.
Fig. 5 shows simulation of light collection by the metal dielectric lens of the first embodiment of this invention.
Fig. 6 further shows the simulation of light collection by the metal dielectric lens of the first embodiment of this invention.
Fig. 7 shows simulation of light collection by the metal dielectric lens of the first embodiment of this invention with changed dimensions of the metal dielectric lens.
Fig. 8 shows different simulation of light collection by the metal dielectric lens of the first embodiment of this invention with changed dimensions of the metal dielectric lens.
Figs. 9(a) and 9(b) are a plan view and a side view respectively showing the structure of one metal plate piece forming a metal dielectric lens of a modification of the first embodiment of this invention.
Figs. 10(a) and 10(b) are a plan view and a side view respectively showing the structure of a different metal plate piece forming the metal dielectric lens of the modification of the first embodiment of this invention.
Fig. 11 shows a partial structure of the metal dielectric lens of the modification of the first embodiment of this invention in an enlarged manner. Fig. 11 (a) is a side view. Fig. 11 (b) is a table showing dimensions.
Fig. 12 shows simulation of light collection by the metal dielectric lens of the modification of the first embodiment of this invention.
Fig. 13 further shows the simulation of light collection by the metal dielectric lens of the modification of the first embodiment of this invention.
Figs. 14(a), 14(b), and 14(c) are a perspective view, a front view, and a side view respectively showing the structure of a metal dielectric lens as a second embodiment of the artificial dielectric lens of this invention.
Figs. 15(a), 15(b), and 15(c) are a perspective view, a front view, and a side view respectively showing the structure of a metal dielectric lens as a third embodiment of the artificial dielectric lens of this invention.
Figs. 16(a) and 16(b) are a plan view and a side view respectively showing the structure of one metal plate piece forming the metal dielectric lens of the third embodiment of this invention.
Figs. 17(a) and 17(b) are a plan view and a side view respectively showing the structure of a different metal plate piece forming the metal dielectric lens of the third embodiment of this invention.
Figs. 18(a), 18(b), and 18(c) are a perspective view, a front view, and a side view respectively showing the structure of a metal dielectric lens without a corrugated structure.
Fig. 19 is a side view showing a partial structure of the metal dielectric lens without a corrugated structure in an enlarged manner.
Fig. 20 shows simulation of light collection by the metal dielectric lens without a corrugated structure.
Fig. 21 further shows the simulation of light collection by the metal dielectric lens without a corrugated structure.

### DESCRIPTION OF EMBODIMENTS

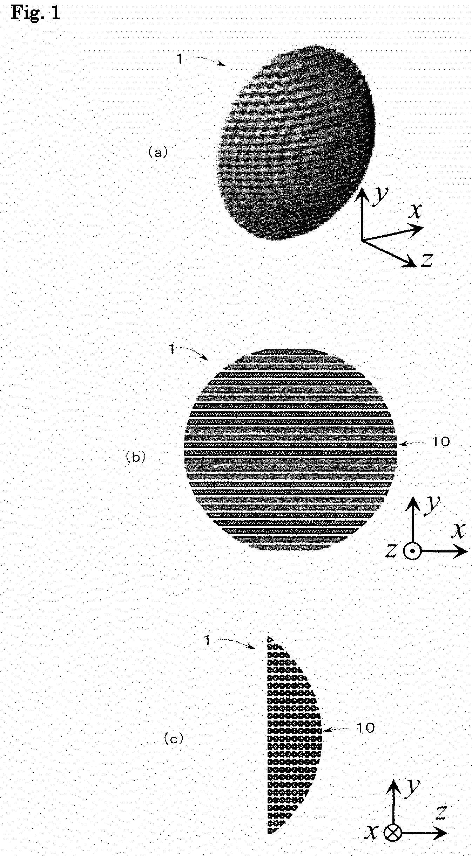

Figs. 1(a), 1(b), and 1(c) are a perspective view, a front view, and a side view respectively showing the structure of a metal dielectric lens as a first embodiment of an artificial dielectric lens of this invention.

As shown in these drawings, a metal dielectric lens 1 of this invention shown in these drawings is a circular lens with one side surface formed into a planar shape and an opposite side surface formed into a spherical shape. A z-axis is defined as an optical axis of the metal dielectric lens 1 and axes perpendicular to the z-axis are defined as an x-axis and a y-axis. An outer shape of multiple metal plate pieces 10 is such that the respective cross sections of the metal plate pieces 10 are parallel to x-z planes at given intervals of the lens along the y-axis from a lower edge to the center and from the center to an upper edge. The metal dielectric lens 1 is formed by laminating the multiple metal plate pieces 10 such that the metal plate pieces 10 are arranged parallel to the x-z planes at the given intervals along the y-axis. Each of the multiple metal plate pieces 10 is given a corrugated structure with multiple groove portions formed in the front and rear surfaces thereof. These groove portions are parallel to the x-axis.

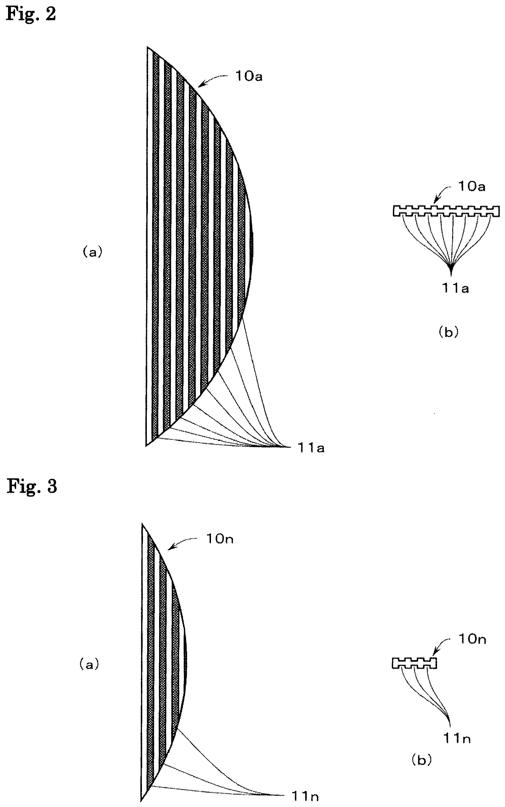

Fig. 2(a) is a plan view showing the configuration of a metal plate piece 10a in an enlarged manner arranged at a substantially central portion of the metal dielectric lens 1. Fig. 2(b) is a side view of the metal plate piece 10a. Fig. 3(a) is a plan view showing the configuration of a metal plate piece 10n in an enlarged manner arranged slightly inward of the outer edge of the metal dielectric lens 1. Fig. 3(b) is a side view of the metal plate piece 10n.

As shown in these drawings, the metal plate piece 10a is formed by processing an ultrathin metal plate of a thickness of about 100 µm such that the outer shape of the metal plate becomes a crescent with one side surface formed into a linear pattern and the opposite side surface formed into an arcuate pattern. The front and rear surfaces of the metal plate are each given groove portions 11a of a number such as eight having a rectangular cross section and formed at given intervals. As shown in Fig. 2(a), the outer shape of the metal plate piece 10a is formed into a crescent of a cross section parallel to the x-z plane at the substantially central portion of the lens. The metal plate piece 10n is formed by processing an ultrathin metal plate of a thickness of about 100 µm such that the outer shape of the metal plate becomes a crescent with one side surface formed into a linear pattern and an opposite side surface formed into an arcuate pattern. The front and rear surfaces of the metal plate are each given groove portions 11n of a number such as three having a rectangular cross section and formed at given intervals. As shown in Fig. 3(a), the outer shape of the metal plate piece 10n is formed into a small crescent of a cross section parallel to the x-z plane slightly inward of the outer edge of the lens.

The multiple metal plate pieces 10 are prepared that have their respective cross sections parallel to the x-z planes at given intervals from the lower edge to the center and from the center to the upper edge of the metal dielectric lens 1. The metal plate piece 10a shown in Figs. 2(a) and 2(b) is arranged parallel to the x-z plane, and the multiple metal plate pieces 10 including the metal plate piece 10n shown in Figs. 3(a) and 3(b) and having their outer shapes that gradually become smaller than that of the metal plate piece 10a are laminated at the given intervals in the upward and downward directions along the y-axis perpendicular to the x-z plane. As a result, the metal dielectric lens 1 of this invention is formed. As shown in the drawings, gaps are formed between the metal plate pieces 10 of the metal dielectric lens 1. This causes visible light to pass through the metal dielectric lens 1. Providing a visible light source to emit visible light to be directed along an optical path of a terahertz electromagnetic wave allows the metal dielectric lens 1 to be arranged in place easily on the optical axis.

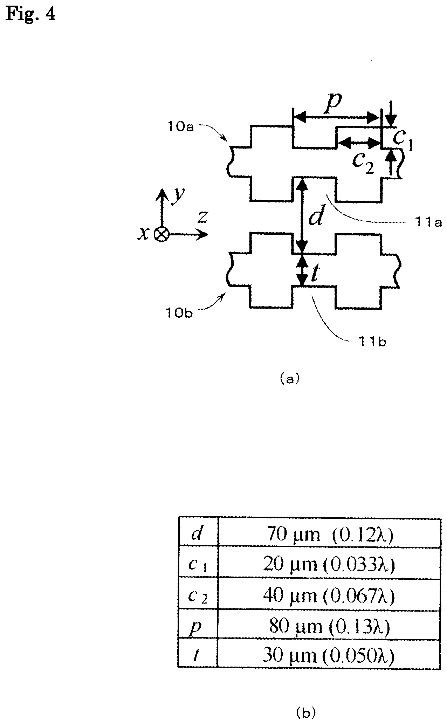

Fig. 4 shows exemplary dimensions of the metal dielectric lens 1 of this invention. Fig. 4(a) is a side view showing a partial configuration of the metal dielectric lens 1 in an enlarged manner. Fig. 4(b) is a table showing exemplary dimensions of this configuration.

Fig. 4(a) shows the configuration of the metal plate piece 10a and that of a metal plate piece 10b adjacent to the metal plate piece 10a in an enlarged manner that form the metal dielectric lens 1. A distance between the bottom of a groove portion 11a of a rectangular cross section in the metal plate piece 10a and the bottom of a groove portion 11b of a rectangular cross section in the adjacent metal plate piece 10b is defined as d. The width of the metal plate piece 10b at the groove portions 11b is defined as t. A period where the groove portion 11 a is formed in the metal plate piece 10a is defined as p. The depth of the groove portion 11 a is defined as c 1. A distance between the groove portions 11a is defined as c2. The dimensions d, c1, c2, p, and t are common to all the metal plate pieces 10. Fig. 4(b) shows examples of specific dimensions of the metal dielectric lens 1 when the design frequency of the metal dielectric lens 1 is determined as 0.5 THz (with a wavelength λ of about 600 mm). That is, when a terahertz electromagnetic wave of 0.5 THz is collected, the metal dielectric lens 1 is formed such that the distance d between the respective bottoms of the groove portions 11 in adjacent metal plate pieces 10 becomes about 70 µm (about 0.12λ), the depth c1 of the groove portion 11 becomes about 20 µm (about 0.033λ), the distance c2 between the groove portions 11 becomes about 40 µm (about 0.067λ), the period p where the groove portion 11 is formed becomes about 80 µm (about 0.13λ), and the width t of the metal plate piece 10 at the groove portions 11 becomes about 30 µm.

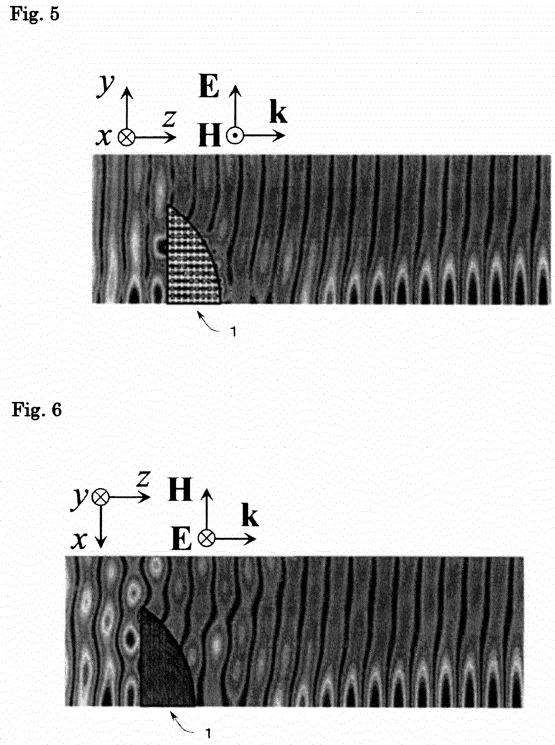

Figs. 5 and 6 show analyzed light collecting effect by the metal dielectric lens 1 having a design frequency of 0.5 THz and the aforementioned dimensions. Fig. 5 shows a result of analysis about a y-z plane of the metal dielectric lens 1 having an optical axis in the z-axis direction. Fig. 6 shows a result of analysis about the x-z plane of the metal dielectric lens 1 having an optical axis in the z-axis direction. For the analysis, HFSS Version 13 available from ANSYS, Inc. was used as a finite element method simulator. To reduce an analysis area, a quarter model was analyzed according to the image theorem. In Figs. 5 and 6, a terahertz electromagnetic wave enters the metal dielectric lens 1 from the left side of the plane of the sheet to travel toward the right side. Figs. 5 and 6 show that effective light collecting effect is achieved about the terahertz electromagnetic wave having passed through the metal dielectric lens 1. The following describes principle of the light collection. In the metal dielectric lens 1, forming the metal plate piece 10 into the corrugated structure causes a phase delay of the terahertz electromagnetic wave to delay the terahertz electromagnetic wave while the terahertz electromagnetic wave propagates through the front and rear surfaces of the metal plate piece 10 where the multiple groove portions 11 are formed in given periods. The respective lengths of the multiple metal plate pieces 10 in the optical axis direction become shorter toward the outer edge while the metal plate piece 10 at the central portion has the greatest length. Thus, a phase delay becomes large in a terahertz electromagnetic wave having passed through the central portion of the metal dielectric lens 1 and becomes smaller in a terahertz electromagnetic wave having passed through a part of the metal dielectric lens 1 closer to its outer edge. It is considered that this allows the electromagnetic wave to be collected. In this case, the focal length of the metal dielectric lens 1 is determined according to the curvature of a curved surface of the metal dielectric lens 1.

It is noted that when the action of a dielectric substance is considered microscopically, molecules or atoms forming a substance act as an electric dipole (dipole) on an electromagnetic wave, and the action of the electric dipole delays the phase of the electromagnetic wave. Based on this principle, the electromagnetic wave can be collected by forming the dielectric substance into a lens shape. As described, it is considered that since the metal dielectric lens 1 of the corrugated structure can collect an electromagnetic wave by delaying the electromagnetic wave as a result of the corrugation, the corrugated structure behaves as a dielectric substance. It is noted that setting the width (p - c2) of the groove portion 11 to be about one-tenth of an available wavelength makes the corrugation behave effectively as a dielectric substance to delay an electromagnetic wave. That is, laminating the metal plate pieces 10 of the corrugated structure at given intervals makes the laminate function as a metamaterial. In the metal dielectric lens 1, the phase of an electromagnetic wave is delayed according to parameters including the number of the groove portions 11 formed in the metal plate piece 10, and the width and the depth of the groove portion 11. Thus, a refractive index responsive to these parameters of said groove portion can be obtained.

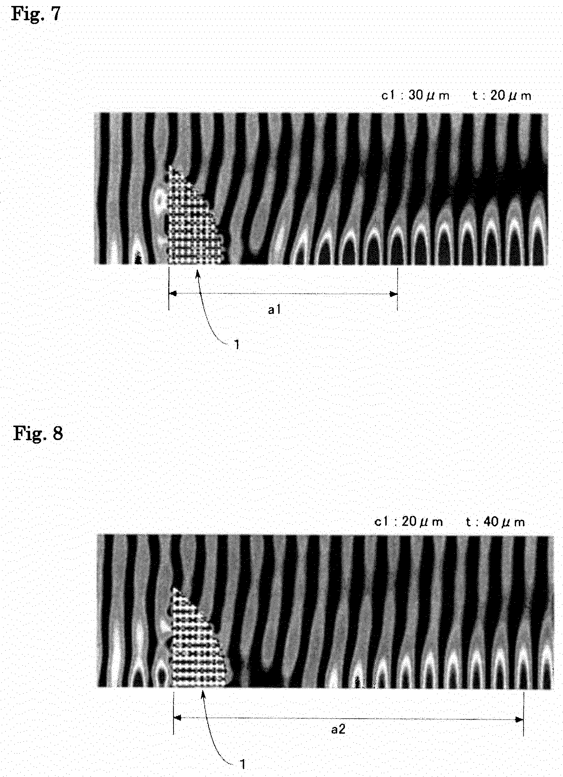

Fig. 7 shows light collecting effect by the metal dielectric lens 1 analyzed by the analysis technique of Figs. 5 and 6 while the metal dielectric lens 1 has a design frequency of 0.5 THz, the depth c1 of the groove portion 11a changed to about 30 µm (about 0.050λ), the width t at the groove portions 11 changed to about 20 µm (about 0.033λ), and the other dimensions same as those of the aforementioned dimensions. Referring to Fig.7, it can be understood that even with the changed dimensions, effective light collecting effect is still achieved about a terahertz electromagnetic wave having passed through the metal dielectric lens 1. And the maximum value of an intensity relative to the input having passed through the metal dielectric lens 1 is obtained at a point separated by about 3.02 mm (about 5.0λ) indicated by a1 from the planar portion of the metal dielectric lens 1, where the intensity of about 2.5 times is obtained.

Fig. 8 shows light collecting effect by the metal dielectric lens 1 analyzed by the analysis technique of Figs. 5 and 6 while the metal dielectric lens 1 has a design frequency of 0.5 THz, the depth c1 of the groove portion 11a changed to about 20 µm (about 0.0337λ), the width t at the groove portions 11 changed to about 40 µm (about 0.067λ), and the other dimensions same as those of the aforementioned dimensions. Referring to Fig. 8, it can be understood that even with the changed dimensions, effective light collecting effect is still achieved about a terahertz electromagnetic wave having passed through the metal dielectric lens 1. The maximum value of intensity relative to the input having passed through the metal dielectric lens 1 is obtained at a point separated by about 4.59 mm (about 7.7λ) indicated by a2 from the planar portion of the metal dielectric lens 1 where the intensity of about 1.8 times is obtained.

The above description shows that making the depth c1 of the groove portion 11 greater collects more terahertz electromagnetic waves having passed through the metal dielectric lens 1 to increase the maximum value of intensity relative to the input and to shorten a distance required to obtain the maximum value.

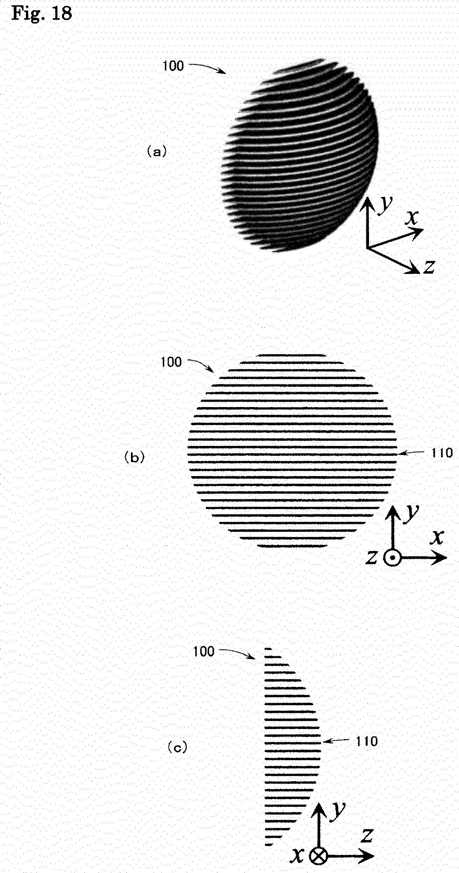

In order to show that the corrugated structure delays and collects an electromagnetic wave, light collecting effect achieved by a metal dielectric lens without a corrugated structure was analyzed. Figs. 18(a), 18(b), and 18(c) are a perspective view, a front view, and a side view respectively showing the configuration of a metal dielectric lens 100 without a corrugated structure.

In the metal dielectric lens 100 without a corrugated structure shown in these drawings , when the z-axis is defined as an optical axis of the metal dielectric lens 100 and axes perpendicular to the z-axis are defined as the x-axis and the y-axis, an outer shape of multiple metal plate pieces 110 is such that the respective cross sections of the multiple metal plate pieces 110 are parallel to the x-z planes at given intervals of the lens along the y-axis from a lower edge to the center and from the center to an upper edge. The metal dielectric lens 100 is formed by laminating the multiple metal plate pieces 110 such that the metal plate pieces 110 are arranged parallel to the x-z planes at the given intervals along the y-axis. The front and rear surfaces of each of the multiple metal plate pieces 110 is not given a groove portion, so that they are formed as smooth flat surfaces.

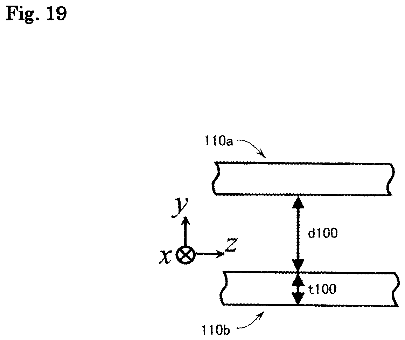

Fig. 19 is a side view showing a partial configuration of the metal dielectric lens 100 in an enlarged manner and shows the configuration of a metal plate piece 110a and that of a metal plate piece 110b adjacent to the metal plate piece 110a in an enlarged manner that form the metal dielectric lens 100. A distance between the metal plate pieces 110a and 110b is defined as d100. The width of the metal plate piece 110b is defined as t100. The dimensions d110 and t100 are common to all the metal plate pieces 110. With the design frequency of the metal dielectric lens 100 of 0.5 THz (with a wavelength λ of about 600 mm), the metal dielectric lens 100 is formed such that the distance d100 between adjacent metal plate pieces 110 becomes about 70 µm (about 0.12λ), and that the width t100 of the metal plate piece 10b at the groove portions 11b becomes about 30 µm.

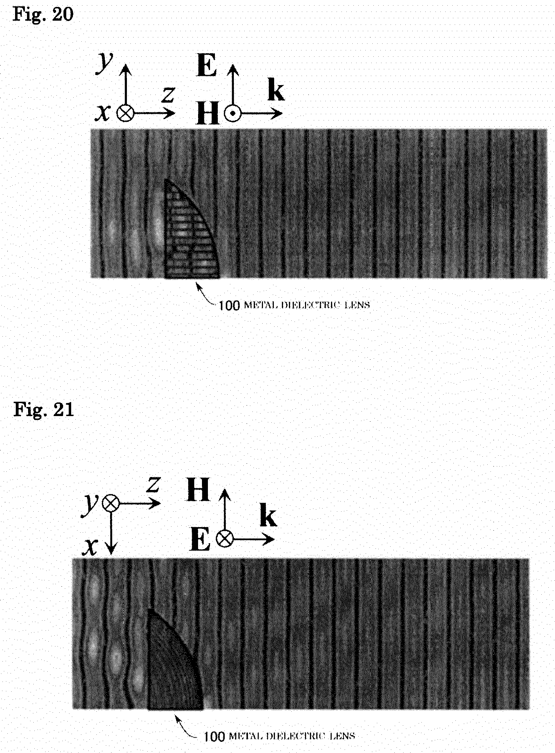

Figs. 20 and 21 show analyzed light collecting effect by the metal dielectric lens 100 having a design frequency of 0.5 THz and the aforementioned dimensions. Fig. 20 shows a result of analysis about the y-z plane of the metal dielectric lens 100. Fig. 21 shows a result of analysis about the x-z plane of the metal dielectric lens 1. For the analysis, HFSS Version 13 available from ANSYS, Inc. was used as a finite element method simulator. To reduce an analysis area, a quarter model was analyzed according to the image theorem. Referring to Figs. 20 and 21, it can be understood that light is not collected. That is, it can be understood that Figs. 20 and 21 show that in the metal dielectric lens 100 without a corrugated structure, an electromagnetic wave is not delayed and is not collected while it passes through the metal dielectric lens 100.

The above description shows that the metal dielectric lens 1 of this invention delays and collects an electromagnetic wave by forming the metal plate piece 10 into the corrugated structure.

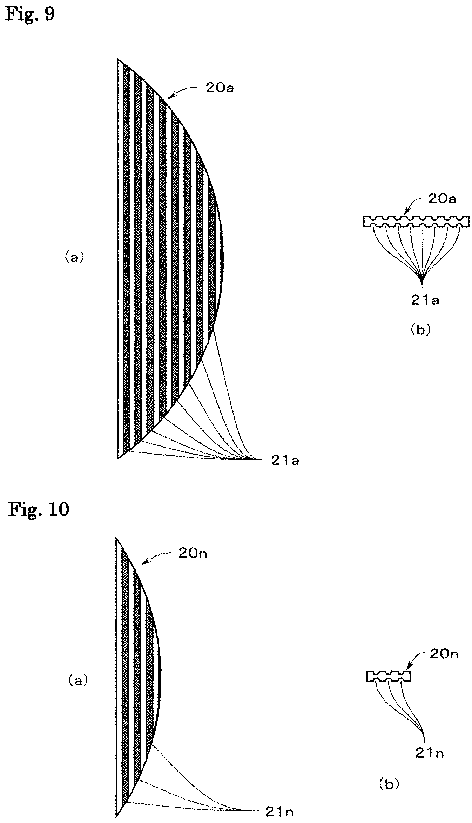

A metal dielectric lens 2 of a modification of the first embodiment of this invention will be described next. The metal dielectric lens 2 of the modification of the first embodiment of this invention includes a groove portion 21 having a semicircular cross section formed in a metal plate piece instead of the groove portion 11 having a rectangular cross section. The configuration of the metal dielectric lens 2 is the same in other respects as that of the metal dielectric lens 1. Fig. 9(a) is a plan view showing the configuration of a metal plate piece 20a in an enlarged manner arranged at a substantially central portion of the metal dielectric lens 2 of the modification of the first embodiment of this invention. Fig. 9(b) is a side view of the metal plate piece 20a. Fig. 10(a) is a plan view showing the configuration of a metal plate piece 20b in an enlarged manner arranged slightly inward of the outer edge of the metal dielectric lens 2 of the modification of the first embodiment of this invention. Fig. 10(b) is a side view of the metal plate piece 20b.

As shown in these drawings, the metal plate piece 20a is formed by processing an ultrathin metal plate of a thickness of about 100 µm such that the outer shape of the metal plate becomes a crescent with front and rear surfaces each given groove portions 21a of a number such as eight having a semicircular cross section and formed at given intervals. The outer shape of the metal plate piece 20a is formed into a crescent of a cross section parallel to the x-z plane at the substantially central portion of the lens. The metal plate piece 20n is formed by processing an ultrathin metal plate of a thickness of about 100 µm such that the outer shape of the metal plate becomes a crescent with front and rear surfaces each given groove portions 21n of a number such as three having a semicircular cross section and formed at given intervals. The outer shape of the metal plate piece 20n is formed into a crescent smaller than that of the metal plate piece 20a and has a cross section parallel to the x-z plane slightly inward of the outer edge of the metal dielectric lens 2.

Multiple metal plate pieces 20 having their respective cross sections parallel to the x-z planes at given intervals from the lower edge to the center and from the center to the upper edge of the metal dielectric lens 2 are prepared. The metal plate piece 20a shown in Figs. 9(a) and 9(b) is arranged parallel to the x-z plane, and the multiple metal plate pieces 20 including the metal plate piece 20n shown in Figs. 10(a) and 10(b) having their crescent outer shapes that gradually become smaller than that of the metal plate piece 20a are laminated at the given intervals in the upward and downward directions along the y-axis perpendicular to the x-z plane. As a result, the metal dielectric lens 2 of the modification of this invention is formed. As shown in the drawings, gaps are formed between the metal plate pieces 20 of the metal dielectric lens 2. This causes visible light to pass through the metal dielectric lens 2. Providing a visible light source to emit visible light to be directed along an optical path of a terahertz electromagnetic wave allows the metal dielectric lens 2 to be arranged in place easily on the optical axis.

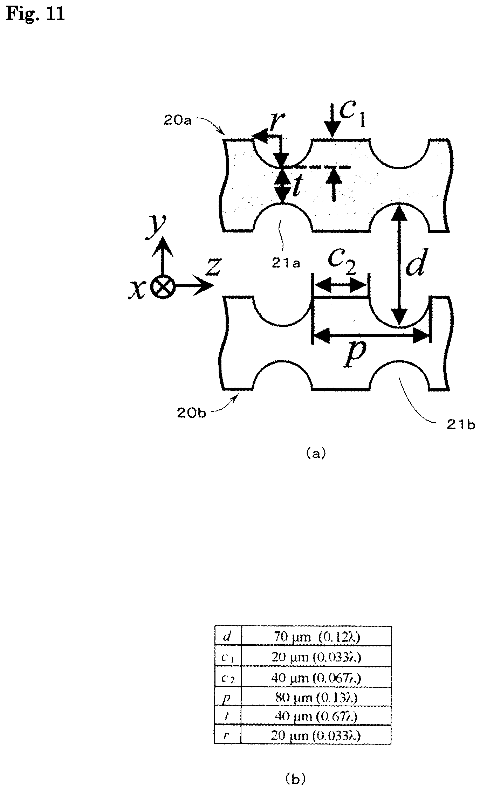

Fig. 11 shows exemplary dimensions of the metal dielectric lens 2 of the modification of this invention. Fig. 11(a) is a side view showing a partial configuration of the metal dielectric lens 2 in an enlarged manner. Fig. 11 (b) is a table showing exemplary dimensions of this configuration.

Fig. 11(a) shows the configuration of the metal plate piece 20a and that of a metal plate piece 20b adjacent to the metal plate piece 20a in an enlarged manner that form the metal dielectric lens 2 of the modification. A groove portion 21 a in the metal plate piece 20a has a semicircular cross section and a distance between the bottom of the groove portion 21a and the bottom of a groove portion 21 b of a semicircular cross section in the adjacent metal plate piece 20b is defined as d. The width of the metal plate piece 20b at the bottoms of the groove portions 21b is defined as t. A period where the groove portion 21a is formed in the metal plate piece 20a is defined as p. The depth of the groove portion 21a of a semicircular cross section is defined as c1. The radius of the groove portion 21 a of a semicircular cross section is defined as r. A distance between the groove portions 21b is defined as c2. It should be noted that the dimensions d, c1, c2, p, t, and r are common to all the metal plate pieces 20. Fig. 11(b) shows examples of specific dimensions of the metal dielectric lens 2 of the modification determined with the design frequency of the metal dielectric lens 2 of 0.5 THz (with a wavelength λ of about 600 mm). That is, to collect a terahertz electromagnetic wave of 0.5 THz, the metal dielectric lens 2 is formed such that the distance d between the respective bottoms of the groove portions 21 in adjacent metal plate pieces 20 becomes about 70 µm (about 0.12λ), that the depth c1 of the groove portion 21 and the radius r each become about 20 µm (about 0.033λ), that the distance c2 between the groove portions 21 becomes about 40 µm (about 0.067λ), that the period p where the groove portion 21 is formed becomes about 80 µm (about 0.13λ), and that the width t of the metal plate piece 20 at the groove portions 21 becomes about 30 µm.

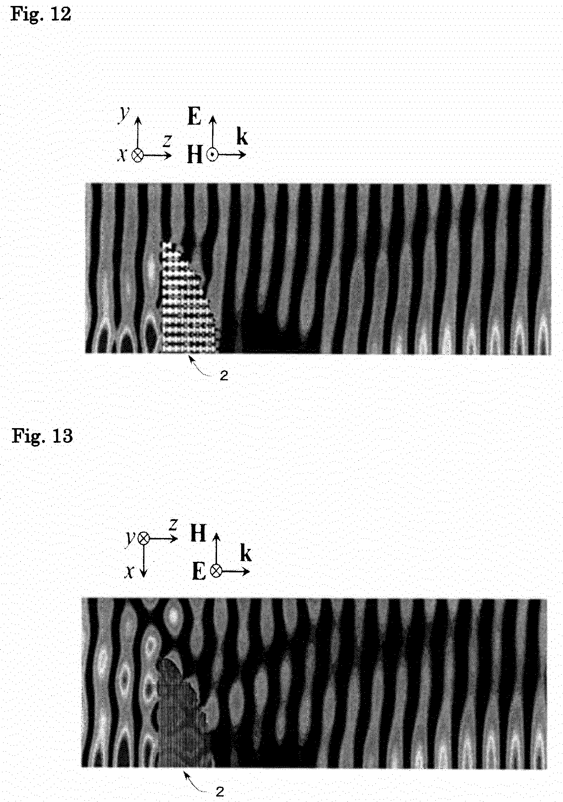

Figs. 12 and 13 show analyzed light collecting effect by the metal dielectric lens 2 of the modification having a design frequency of 0.5 THz and the aforementioned dimensions. Fig. 12 shows a result of analysis about the y-z plane of the metal dielectric lens 2. Fig. 13 shows a result of analysis about the x-z plane of the metal dielectric lens 2. For the analysis, HFSS Version 13 available from ANSYS, Inc. was used as a finite element method simulator. To reduce an analysis area, a quarter model was analyzed according to the image theorem. Referring to Figs. 12 and 13, it can be understood that they show that effective light collecting effect is achieved. This shows that in the metal dielectric lens 2 of the modification, forming the cross section of the groove portion 21 in the metal plate piece 20 into a semicircle also causes a phase delay of a terahertz electromagnetic wave to collect the terahertz electromagnetic wave while the terahertz electromagnetic wave propagates through the groove portion 21.

It is noted that setting the radius r of the groove portion 21 to be about one-tenth of an available wavelength makes corrugation behave effectively as a dielectric substance to delay an electromagnetic wave. In the metal dielectric lens 2 of the modification, the cross section of the groove portion 21 is formed into a semicircle. Thus, the groove portion 21 can be formed in the metal plate piece 20 for example with a drill of a fine diameter. As a result, the metal dielectric lens 2 can be formed easily.

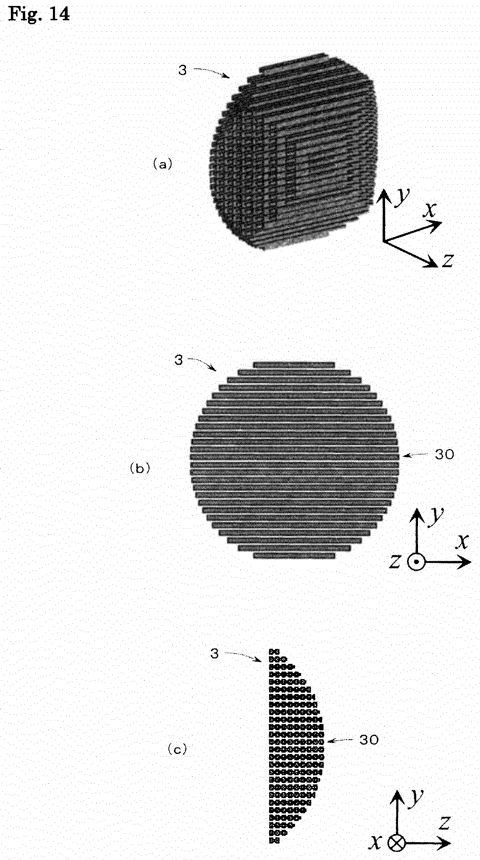

Figs. 14(a), 14(b), and 14(c) are a perspective view, a front view, and a side view respectively showing the configuration of a metal dielectric lens 3 as a second embodiment of the artificial dielectric lens of this invention.

As shown in these drawings, the metal dielectric lens 3 of the second embodiment of this invention shown in these drawings is a circular lens with one side surface formed into a planar shape and an opposite side surface formed into a spherical shape. The z-axis is defined as an optical axis of the metal dielectric lens 3 and axes perpendicular to the z-axis are defined as the x-axis and the y-axis. An outer shape of multiple metal plate pieces 30 is such that the respective cross sections of the metal plate pieces 30 are parallel to the x-z planes at given intervals of the lens along the y-axis from a lower edge to the center and from the center to an upper edge. The metal dielectric lens 3 is formed by laminating the multiple metal plate pieces 30 such that the metal plate pieces 30 are arranged parallel to the x-z planes at the given intervals along the y-axis. Each of the multiple metal plate pieces 30 is given a corrugated structure with multiple groove portions formed in the front and rear surfaces thereof. These groove portions are parallel to the x-axis.

The metal plate piece 30 of the metal dielectric lens 3 of the second embodiment has substantially the same shape as that of the metal plate piece 10 of the metal dielectric lens 1 of the first embodiment shown in Figs. 2 and 3. Meanwhile, the edges of the metal plate pieces 30 are processed to be arranged into a staircase pattern. That is, in the metal dielectric lens 1 of the first embodiment, the respective edges of the multiple metal plate pieces 10 are connected into a smooth shape as shown in Figs. 1(a) to 1(c). In the metal dielectric lens 3 of the second embodiment, the respective edges of the multiple metal plate pieces 30 are connected into a staircase pattern. Thus, the multiple metal plate pieces 30 can be formed by easy processing. Similarly, the metal dielectric lens 1 of the first embodiment, the metal dielectric lens 3 of the second embodiment causes visible light to pass therethrough and allows efficient collection of a terahertz electromagnetic wave. In addition, a groove portion formed in each of the multiple metal plate pieces 30 may have a rectangular or semicircular cross section.

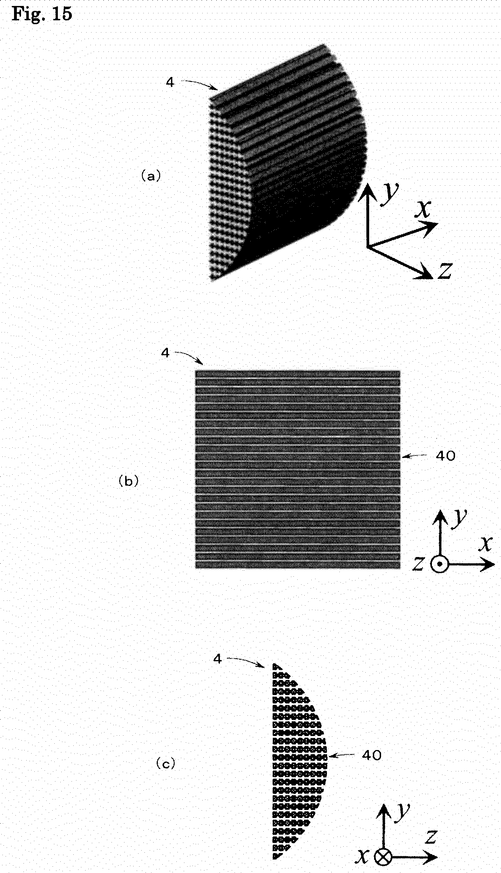

Figs. 15(a), 15(b), and 15(c) are a perspective view, a front view, and a side view respectively showing the configuration of a metal dielectric lens 4 as a third embodiment of the artificial dielectric lens of this invention.

As shown in these drawings, the metal dielectric lens 4 of the third embodiment of this invention shown in these drawings is a cylindrical lens with one side surface formed into a planar shape and an opposite side surface formed into a spherical shape. The z-axis is defined as an optical axis of the metal dielectric lens 4 and axes perpendicular to the z-axis are defined as the x-axis and the y-axis. An outer shape of multiple metal plate pieces 40 is such that the respective cross sections of the metal plate pieces 40 are parallel to the x-z planes at given intervals of the lens along the y-axis from a lower edge to the center and from the center to an upper edge. The metal dielectric lens 4 is formed by laminating the multiple metal plate pieces 40 such that the metal plate pieces 40 are arranged parallel to the x-z planes at the given intervals along the y-axis. Each of the metal plate pieces 40 is given a corrugated structure with multiple groove portions formed in the front and rear surfaces thereof. These groove portions are parallel to the x-axis.

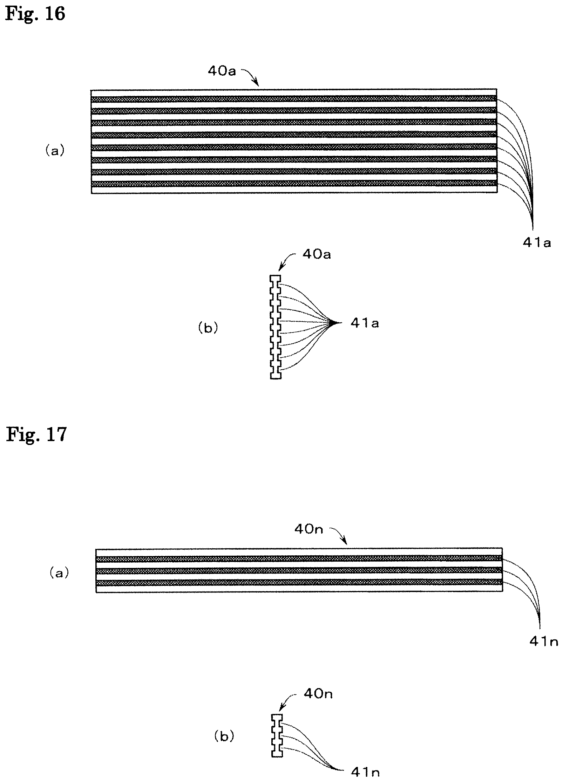

Fig. 16(a) is a plan view showing the configuration of a metal plate piece 40a in an enlarged manner arranged at a substantially central portion of the metal dielectric lens 4 of the third embodiment. Fig. 16(b) is a side view of the metal plate piece 40a. Fig. 17(a) is a plan view showing the configuration of a metal plate piece 40n in an enlarged manner arranged slightly inward of the outer edge of the metal dielectric lens 4. Fig. 17(b) is a side view of the metal plate piece 40n.

As shown in these drawings, the metal plate piece 40a is formed by processing an ultrathin metal plate of a thickness of about 100 µm such that the outer shape of the metal plate becomes a rectangle. The front and rear surfaces of the metal plate are each given groove portions 41a of a number such as eight having a rectangular cross section and formed at given intervals. As shown in Fig. 16(a), the outer shape of the metal plate piece 40a is formed into a rectangle of a cross section parallel to the x-z plane at the substantially central portion of the lens. The metal plate piece 40n is formed by processing an ultrathin metal plate of a thickness of about 100 µm such that the outer shape of the metal plate becomes a rectangle. The front and rear surfaces of the metal plate are each given groove portions 41n of a number such as three having a rectangular cross section and formed at given intervals. As shown in Fig. 17(a), the outer shape of the metal plate piece 40n is formed into an elongated rectangle of a cross section parallel to the x-z plane slightly inward of the outer edge of the lens.

Multiple metal plate pieces 40 are prepared that have their respective cross sections parallel to the x-z planes at given intervals from the lower edge to the center and from the center to the upper edge of the metal dielectric lens 4 of the third embodiment. The metal plate piece 40a shown in Figs. 16(a) and 16(b) is arranged parallel to the x-z plane, and the multiple metal plate pieces 40 including the metal plate piece 10n shown in Figs. 17(a) and 17(b) and having their outer shapes that gradually become smaller than that of the metal plate piece 40a are laminated at the given intervals in the upward and downward directions along the y-axis perpendicular to the x-z plane. As a result, the metal dielectric lens 4 of the third embodiment is formed. Like the metal dielectric lens 1 of the first embodiment, the metal dielectric lens 4 of the third embodiment causes visible light to pass there through and allows efficient collection of a terahertz electromagnetic wave. A groove portion formed in each of the multiple metal plate pieces 30 may have a rectangular or semicircular cross section. Further, in the metal dielectric lens 4 of the third embodiment, the multiple metal plate pieces 40 are formed into a rectangle. Thus, the multiple metal plate pieces 40 can be formed by easy processing.

### INDUSTRIAL APPLICABILITY

In the aforementioned artificial dielectric lens of this invention, a conductive plate is formed of a metal plate, however , this is not for limitation, a conductor attached or deposited on the front and rear surface of an insulating film may also be used. Also, the aforementioned dimensions about the metal dielectric lens of each of the embodiments of this invention are given only as an example and not for limitations. The number of groove portions formed in a metal plate piece of the metal dielectric lens of each of the embodiments, and the width and the depth of such a groove portion are given only as examples. Changing these parameters can control the equivalent dielectric constant of the metal dielectric lens 1. That is, the artificial dielectric lens of this invention is allowed to obtain a desired refractive index.

The metal dielectric lens 1 of the embodiment of this invention has a circular or rectangular shape when viewed from the front, however, this is not for limitation, the metal dielectric lens 1 may have a triangular or polygonal shape. A groove portion formed in a metal plate piece of the embodiment has a rectangular or semicircular cross section, however, this it not for limitation, the groove portion may have an oval or polygonal cross section.

The aforementioned metal dielectric lens of the embodiment of this invention has one side surface formed into a planar shape and an opposite side surface formed into a spherical shape. Alternatively, both one side surface and the opposite side surface may be formed into a spherical shape. Further, in the metal dielectric lens of the embodiment of this invention, a groove portion formed in the front surface of a metal plate piece is aligned with a groove portion formed in the rear surface of the metal plate piece, however, this is not for limitation, the groove portions in the front and rear surfaces may be formed to be shifted from each other. Alternatively, the groove portion may be formed only in one of the front or rear surface.

It is noted that the metal dielectric lens of each embodiment of this invention may be used as a lens for focusing of an electromagnetic wave in a terahertz band. However, the terahertz band is given not for limitation. The metal dielectric lens of each embodiment of this invention may also be used as a lens for focusing of an electromagnetic wave in a different frequency band.

### REFERENCE SIGN LIST

- 1 to 4:: metal dielectric lens
- 10:: metal plate piece
- 10a:: metal plate piece
- 10b:: metal plate piece
- 10n:: metal plate piece
- 11:: groove portion
- 11a:: groove portion
- 11b:: groove portion
- 11n:: groove portion
- 20:: metal plate piece
- 20a:: metal plate piece
- 20b:: metal plate piece
- 20n:: metal plate piece
- 21:: groove portion
- 21a:: groove portion
- 21b: groove portion
- 21n:: groove portion
- 30:: metal plate piece
- 40:: metal plate piece
- 40a:: metal plate piece
- 40n:: metal plate piece
- 41a:: groove portion
- 41n:: groove portion
- 100:: metal dielectric lens
- 110:: metal plate piece
- 110a:: metal plate piece
- 110b:: metal plate piece

## Claims

1. An artificial dielectric lens (1, 2, 3, 4), suitable for operation at a design frequency associated with free-space wavelength A, comprising a spherical surface form or a cylindrical form at least on one side of the lens and multiple laminated parallel conductive plate pieces (10, 20, 30, 40, 110) wherein
while a z-axis is defined as an optical axis of the lens, and axes perpendicular to the z-axis are defined as an x-axis and a y-axis,
the conductive plate pieces are arranged at given intervals along the y-axis from a lower edge of the lens to a center of the lens and from the center to an upper edge thereof to be parallel to x-z planes of the lens,
the artificial dielectric lens (1,2,3,4) further comprising multiple groove portions (11,21,41) formed in the conductive plate pieces in a direction of the x-axis,
the artificial dielectric lens **characterized in that** the lens is configured such that a wave is delayed and collected according to parameters including the number of the groove portions, and the width and the depth of the groove portion,
the spherical surface form is convex or the cylindrical form is convex.

2. The artificial dielectric lens according to claim 1, wherein the groove portion includes multiple groove portions formed in each of a front surface and a rear surface of the conductive plate piece that are parallel to the x-z plane.

3. The artificial dielectric lens according to claim 1 or 2, wherein while a design frequency has a wavelength defined as λ, the width of the groove portion is about λ/10 or less.

## Patentansprüche

1. Künstliche dielektrische Linse (1, 2, 3, 4), die für den Betrieb bei einer mit der Freiraumwellenlänge λ verbundenen Auslegungsfrequenz geeignet ist und die wenigstens auf einer Seite der Linse eine sphärische Oberflächenform oder eine zylindrische Form und mehrfach laminierte parallele Leitungsplattenstücke (10, 20, 30, 40, 110) aufweist, wobei
wenn eine z-Achse als optische Achse der Linse definiert ist, und Achsen senkrecht zur z-Achse als eine x-Achse und eine y-Achse definiert sind, die Leitungsplattenstücke in vorgegebenen Abständen entlang der y-Achse von einer unteren Kante der Linse zu einer Mitte der Linse und von der Mitte zu ihrer oberen Kante davon angeordnet sind, sodass sie parallel zu der x-z-Ebene der Linse verlaufen,
wobei die künstliche dielektrische Linse, ferner mehrere Nutabschnitte (11, 21, 41) aufweist, die in den Leitungsplattenstücken in Richtung der x-Achse ausgebildet sind,
wobei die künstliche dielektrische Linse **dadurch gekennzeichnet ist, dass**
die Linse so konfiguriert ist, dass eine Welle gemäß Parametern, die die Anzahl der Nutabschnitte und die Breite und die Tiefe des Nutabschnitts umfassen, verzögert und gesammelt wird,
wobei die sphärische Oberflächenform konvex ist, oder die zylindrische Form konvex ist.

2. Künstliche dielektrische Linse nach Anspruch 1, wobei der Nutabschnitt mehrere Nutabschnitte aufweist, die jeweils in einer Vorderfläche und einer Rückfläche des Leitungsplattenstücks ausgebildet sind, die parallel zu der x-z-Ebene verlaufen.

3. Künstliche dielektrische Linse nach Anspruch 1 oder 2, wobei, wenn eine Auslegungsfrequenz eine als λ definierte Wellenlänge aufweist, die Breite des Nutabschnitts etwa λ/10 oder weniger beträgt.

## Revendications

1. Lentille diélectrique artificielle (1, 2, 3, 4) convenant à un fonctionnement à une fréquence de conception associée à une longueur d'onde λ dans l'espace libre, comprenant une forme de surface sphérique ou une forme cylindrique sur au moins un côté de la lentille, ainsi que de multiples pièces plates conductrices parallèles stratifiées (10, 20, 30, 40, 110), dans laquelle
alors qu'un axe z est défini comme étant l'axe optique de la lentille et que des axes perpendiculaires à l'axe z sont définis comme étant l'axe x et l'axe y,
les pièces plates conductrices sont agencées à des intervalles donnés le long de l'axe y depuis la bordure inférieure de la lentille jusqu'au centre de la lentille et depuis le centre jusqu'à la bordure supérieure de celle-ci afin d'être parallèles au plan x - z de la lentille,
la lentille diélectrique artificielle (1, 2, 3, 4) comprend en outre de multiples parties formant rainures (11, 21, 41) formées dans les pièces plates conductrices dans la direction de l'axe x,
la lentille diélectrique artificielle étant **caractérisée en ce que** la lentille est configurée de sorte à ce qu'un signal soit retardé et recueilli en fonction de paramètres comprenant le nombre de parties formant rainures, la largeur et la profondeur d'une partie formant rainure,
la forme de surface sphérique est convexe ou la forme cylindrique est convexe.

2. Lentille diélectrique artificielle selon la revendication 1, dans laquelle la partie formant rainure inclut de multiples éléments formant rainures formés dans chacune de la surface avant et de la surface arrière de la pièce plate conductrice, lesquelles sont parallèles au plan x - z.

3. Lentille diélectrique artificielle selon la revendication 1 ou la revendication 2, dans lequel alors que la fréquence de conception présente une longueur d'onde définie comme étant λ, la largeur de la partie formant rainure est environ λ / 10 ou moins.
